# EUROPÄISCHE PATENTSCHRIFT

(11) **EP 1 747 736 B1**
(45) Veröffentlichungstag und Bekanntmachung des Hinweises auf die Patenterteilung: **07.05.2008**
(21) Anmeldenummer: 05016579.4
(22) Anmeldetag: 29.07.2005
(51) Int. Cl.: A47J 31/00, A47J 31/60

(54) **Getränkesystem**
Beverage system
Appareil pour boisson

(43) Veröffentlichungstag der Anmeldung: 31.01.2007
(73) Patentinhaber: WMF WÜRTTEMBERGISCHE METALLWARENFABRIK AG, 73309 Geislingen/Steige (DE)
(72) Erfinder: Göltenboth, Frank, 89134 Blaustein (DE)
(74) Vertreter: Grünecker, Kinkeldey, Stockmair & Schwanhäusser Anwaltssozietät

(56) Entgegenhaltungen:
- US-A- 4 649 809
- US-A- 4 974 500
- US-A- 5 285 718
- US-A1- 2004 112 917

## Beschreibung

Die Erfindung bezieht sich auf ein Getränkesystem mit einer Kaffeemaschine.

Der Verbrauchergeschmack tendiert gegenwärtig mehr und mehr zu leichten, alkoholfreien Getränken und insbesondere zu Wasser. Es sind eine Vielzahl Wasserspender bekannt, die in der Lage sind, Leitungswasser tafelgerecht aufzubereiten, d.h. insbesondere entweder zu kühlen oder bevorzugt mit einem Gas, beispielsweise Kohlendioxyd oder Sauerstoff, zu versetzen. Derartige Wasserspender sind beispielsweise aus der DE-U-298 16 612, der DE-B-199 60 149, der WO-A-02/02455 oder der WO-A-93/10035 bekannt. Ein auf diese Weise aufbereitetes Leitungswasser wird jedoch zunehmend auch in Restaurants, Kaffees, Kantinen oder beispielsweise im Bereich der Büroversorgung bzw. sogenannten Convenience Stores verlangt. Das Aufstellen eines Wasserspenders zusätzlich zur auf jeden Fall notwendigen Kaffeemaschine verursacht jedoch Kosten und erfordert zusätzlichen Stellplatz. Zwar ist es bereits aus der oben erwähnten WO93/10035 oder der EP-A-1 352 599 bekannt, verschiedene Getränkespender zusammenzufassen. Zusammengefasst wurden jedoch bisher nur Getränke einer Art, also beispielsweise Kaltgetränke auf Wasserbasis in der WO93/10035 oder Heißgetränke in der EP 1 352 599.

Aus der US-A-5 285 718 ist ein im Oberbegriff des Anspruchs 1 berücksichtigtes Getränkesystem mit einer Kaffeemaschine zum Zubereiten und Ausgeben von Heißgetränken und einem Wasserspender zum Aufbereiten und Ausgeben von Trinkwasser beschrieben. Die Kaffeemaschine und der Wasserspender sind über einen gemeinsamen Wasseranschluss mit Filter an ein Wasseheitungsnetz angeschlossen, ansonsten jedoch strikt getrennt ausgeführt. Eine Reinigungseinrichtung ist nicht beschrieben, und könnte auch nicht wegen der strikten Trennung der beiden Getränkezweige sowohl für die Kaffeemaschine als auch für den Wasserspender eingesetzt werden.

Der Erfindung liegt somit die Aufgabe zugrunde, ein Getränkesystem bereitzustellen, das auf konstruktiv einfache und kostengünstige Weise mit wenig Platzbedarf in der Lage ist, Heißgetränke, wie Kaffee oder Tee, und Wasser auszugeben.

Die Aufgabe wird durch die im Anspruch 1 angegebenen Merkmale gelöst.

Durch die erfindungsgemäße Lösung wird sowohl für die Kaffeemaschine als auch den Wasserspender ein gemeinsames Reinigungssystem vorgesehen, so dass Funktionsbestandteile, die sowohl für den Wasserspender als auch für die Kaffeemaschine notwendig oder brauchbar sind, für beide Einheiten eingesetzt werden, und nur einmal vorgesehen werden müssen. Dies spart sowohl Kosten als auch Stellfläche.

Wie dem Stand der Technik zu entnehmen (beispielsweise DE 298 16 612 oder DE 199 60 149) ist es bisher ein Problem, eine Verkeimung des Wasserspenders zu verhindern. Dieses Problem ist besonders gravierend bei Wasserspendem, die im öffentlichen Bereich eingesetzt werden. Kaffeemaschinen weisen bisher ein integriertes Reinigungssystem auf, das erfindungsgemäß für den Wasserspender eingesetzt wird und dessen hygienische Probleme optimal löst, so dass das erfindungsgemäße Getränkessystem allen hygienischen Anforderungen gerecht wird.

Besonders einfach wird die Reinigung des Wasserspenders, wenn das Reinigungssystem unter Mitwirkung des Heißwasserbereiters der Kaffeemaschine arbeitet, so dass der Wasserspender mit Heißwasser gespült werden kann, um sämtliche Mikroorganismen abzutöten.

Vorteilhafte Weiterbildungen der Erfindung sind auch den übrigen Unteransprüchen zu entnehmen. Dabei ist besonders bevorzugt, dass der Wasserspender und die Kaffeemaschine ein gemeinsames Gehäuse aufweisen, was den Platzbedarf weiter verringert und die Kosten weiter senkt.

Ausführungsbeispiele der Erfindung werden nachfolgend anhand der Zeichnungen näher erläutert. Es zeigen:
- Fig. 1: eine schematische Übersichtsdarstellung eines erfindungsgemäßen Getränkesystems,
- Fig. 2: eine schematische Teildarstellung bestimmter Bereiche eines erfindungsgemäßen Getränkesystems,
- Fig. 3: eine schematische Teildarstellung bestimmter Bereiche eines erfindungsgemäßen Getränkesystems, und
- Fig. 4: eine schematische Teildarstellung bestimmter Bereiche eines erfindungsgemäßen Getränkesystems.

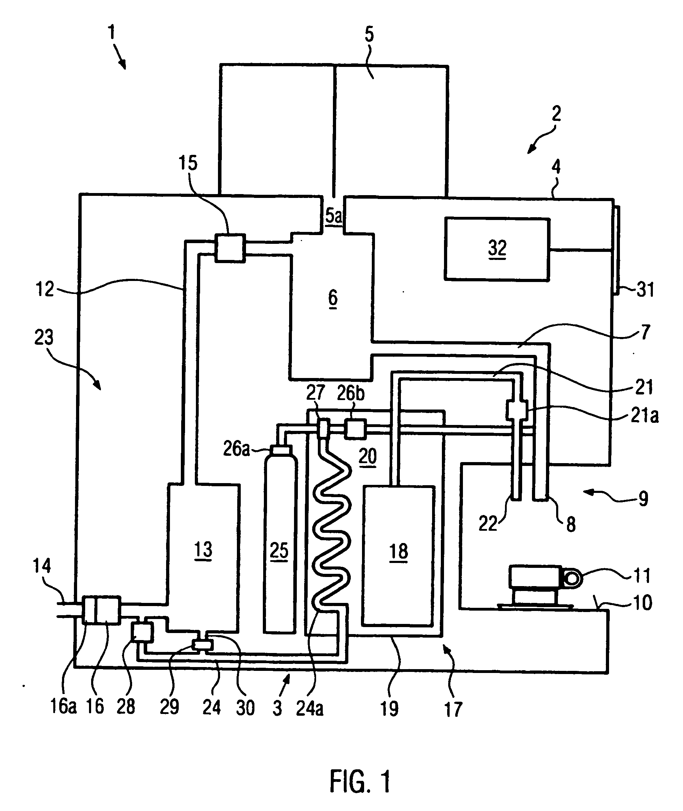

Fig. 1 zeigt eine stark schematische Darstellung wesentlicher Komponenten eines erfindungsgemäßen Getränkesystems 1. Das Getränkesystem 1 enthält eine Kaffeemaschine 2 und einen Wasserspender 3, die im dargestellten Ausführungsbeispiel in einem gemeinsamen Gehäuse 4 untergebracht sind. Es ist jedoch auch möglich, die Kaffeemaschine 2 und den Wasserspender 3 in getrennten Gehäusen unterzubringen, und diese über Leitungen in nachfolgend zu beschreibender Weise miteinander zu verbinden.

Die Kaffeemaschine 2 enthält die üblichen für Kaffeeautomaten notwendigen oder wünschenswerten Bestandteile, die dafür sorgen, dass die Kaffeemaschine 2 selbsttätig oder überwiegend selbsttätig Heißgetränke (Brühgetränke), wie insbesondere Kaffee zubereitet und ausgibt.

Zur Vereinfachung der Darstellung ist lediglich ein Behälter 5 gezeigt, der den Rohstoff für Brühgetränke, wie beispielsweise zwei Sorten Kaffeebohnen oder Kaffeemehl für Filterkaffee und Espresso enthält und im dargestellten Ausführungsbeispiel oben auf dem Gehäuse 4 sitzt und über einen Einfüllschacht 5a mit einer Brüheinrichtung 6 in Verbindung steht. Die Brüheinrichtung 6 führt über eine Leitung 7 zu einem Auslass 8, der Teil einer Auslasseinrichtung 9 ist, und oberhalb einer Stellfläche 10 angeordnet ist, auf der ein zu befüllendes Gefäß 11, dargestellt ist eine Tasse, abgestellt werden kann.

Die Brüheinrichtung 6 wird über eine Leitung 12 mit Heißwasser versorgt, das in einem Heißwasserbereiter 13 zubereitet wird. Der Heißwasserbereiter 13 kann beispielsweise ein Boiler oder ein Durchlauferhitzer oder ein Heißwasserbereiter einer anderen Art sein, die für Kaffeemaschinen geeignet sind und eingesetzt werden. Im dargestellten Ausführungsbeispiel wird der Heißwasserbereiter 13 über eine Leitung 14 an eine Kaltwasserversorgung angeschlossen, die beispielsweise das Wasserleitungsnetz des Gebäudes sein kann. In der Heißwasserleitung 12 ist das übliche Brühventil 15 vorgesehen, das die Zufuhr von Heißwasser in die Brüheinrichtung 6 steuert. Es kann weiterhin eine Pumpe 16 vorgesehen sein, die für eine Druckerhöhung, beispielsweise für die Herstellung von Espresso, sorgt. Im dargestellten Ausführungsbeispiel ist die Pumpe 16 in der Kaltwasserleitung 14, stromaufwärts des Heißwasserbereiters 13 angeordnet. Es kann weiterhin ein Wasserfilter 16a vorgesehen sein, der zweckmäßigerweise der Pumpe 16 vorgeschaltet ist.

Die Kaffeemaschine 2 ist weiterhin zur Ausgabe von milchhaltigen Getränken ausgelegt. Diese können Mischgetränke mit Kaffee oder Tee sein oder sie können in Form von reiner heißer oder kalter Milch ausgegeben werden. Zu diesem Zweck enthält die Kaffeemaschine 2 eine Milchzubereitungseinrichtung 17. Die Einrichtung 17 enthält einen Milchvorrat 18, der im Inneren des Gehäuses 4 oder außerhalb angeordnet sein kann. Der Milchvorrat 18 kann eine handelsübliche Verkaufspackung sein oder kann einen gesonderten Milchbehälter umfassen, in den die Verkaufspackungen umgefüllt werden.

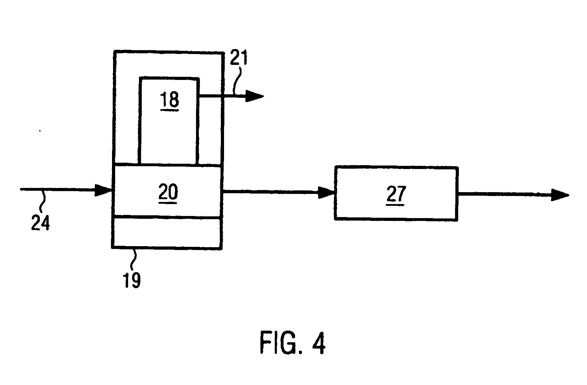

Der Milchvorrat 18 ist in einer Kühleinrichtung 19 untergebracht, die beispielsweise einen Kühlblock 20 (Fig. 4) enthält. Der Milchvorrat 18 steht weiterhin über eine Milchleitung 21 mit der Auslasseinrichtung 9 in Verbindung und mündet dort bevorzugt in einen eigenen Auslass 22. Zwischen dem Milchvorrat 18 und dem Auslass 22 kann eine der üblichen Aufschäumeinrichtungen vorgesehen sein, die hier nur mit einer Emulgierkammer 21a angedeutet ist. Die Aufschäumeinrichtung kann weiterhin eine Möglichkeit zum selbsttätigen Ansaugen (Venturieffekt) oder zum aktiven Einblasen von Luft und zum Einleiten von Dampf enthalten sein. Da Aufschäumeinrichtungen generell bekannt sind, so wird auf ihre nähere Erläuterung hiermit verzichtet.

Die Kaffeemaschine 2 enthält weiterhin Bedienelemente 31 herkömmlicher Art, die an der Außenseite des Gehäuses 4 angeordnet sind. Die Bedienelemente 31 sind mit einer Steuerung 32 verbunden, die auf bekannte Weise die Funktionen der Kaffeemaschine 2 nach programmierten Arbeitsabläufen und im Anschluss an eine entsprechende Betätigung der Bedienelemente 31 steuert.

Die Kaffeemaschine 2 kann jedes bekannte Reinigungssystem 23 aufweisen, wobei das Reinigungssystem 23 im dargestellten Ausführungsbeispiel den Heißwasserbereiter 13 und eine entsprechend programmierte Steuerung 32 einschließt, die dafür sorgt, dass relevante Bestandteile der Kaffeemaschine 2, also beispielsweise die Brüheinrichtung 6 und der Auslass 9 sowie, in nicht dargestellter Weise, die Milchleitung 21, die Emulgierkammer 21a und den Milch-/Milchschaum-Auslass mit Heißwasser durchspült und desinfiziert werden. Weiterhin kann eine der bekannten Einrichtungen zum Einleiten oder Einfüllen eines Reinigungsmittels vorgesehen sein, das in der Zeichnung nicht dargestellt ist.

Der Wasserspender 3 weist eine Kaltwasserzufuhr, in Form einer Zufuhrleitung 24 und einen Auslauf zum Ausgeben des Wassers auf. Bevorzugt besteht die Möglichkeit, das Wasser mit einem Gas, wie beispielsweise Kohlendioxyd und/oder Sauerstoff zu versetzen. Ist dies gewünscht, so ist weiterhin eine Gasquelle 25 vorgesehen, wobei im dargestellten Ausführungsbeispiel eine handelsübliche Gaspatrone eingesetzt wird. Die Gasquelle 25 ist über einen Druckminderer 26a mit einem Karbonisator 27 verbunden, der Gas aus der Gasquelle 25 in das Wasser aus der Leitung 24 einbringt. Nach dem Karbonisator 27 ist in der Leitung 24 ein Kompensatorventil 27b angeordnet, das dafür sorgt, dass sich das Wasser/Gas-Gemisch nicht zu plötzlich entspannt, und das Gas entweicht. Für den Karbonisator 27, den Druckminderer 26a und/oder das Kompensationsventil 27b sind die üblichen Konstruktionen brauchbar, wobei z.B. das Kompensationsventil 27b elektrisch oder manuell betrieben werden kann.

Kaffeemaschine 2 und Wasserspender 3 verwenden erfindungsgemäß Funktionskomponenten gemeinsam. Das dargestellte Getränkesystem 1 basiert auf einer Kaffeemaschine, so dass hier der Wasserspender 3 Funktionskomponenten der Kaffeemaschine 2 verwendet.

Insbesondere zweigt die Wasserleitung 24 von der Kaltwasserleitung 14 ab, bevor diese in den Heißwasserbereiter 13 mündet. Die Abzweigung der Wasserleitung 24 erfolgt stromabwärts der Pumpe 16 bzw. des Wasserfilters 16a, so dass die Zulaufleitung 14, die Pumpe 16 (zur Erhöhung des Wasserdrucks und somit zur Verbesserung der Gasaufnahme) und der Wasserfilter 16a auch für den Wasserspender 3 zur Verfügung stehen. Der Abzweig der Wasserleitung 24 von der Kaltwasserleitung 14 wird über ein Ventil 28 geführt, das über die Steuerung 32 entsprechend einer Benutzereingabe geöffnet und geschlossen wird. Die Gaseinleitung wird ebenfalls entsprechend einer Benutzereingabe geöffnet und geschlossen. Die Benutzereingabe erfolgt bevorzugt ebenfalls über die Bedienelemente 31, so dass der Wasserspender 3 auch Gebrauch macht von den Steuer- und Bedieneinrichtungen der Kaffeemaschine 2, insbesondere der Steuerung 32 und den Bedienelementen 31.

Die Wasserleitung 24 und/oder der Karbonisator 27 werden bevorzugt gekühlt. Im dargestellten Ausführungsbeispiel geschieht dies in der Kühleinrichtung 19, die auch den Milchvorrat 18 und die Milchleitung 21 enthält. Dabei kann die Wasserleitung 24 stromaufwärts und/oder stromabwärts des Karbonisators 27 durch die Kühleinrichtung 19 geführt werden, um das Wasser zu kühlen und vor allen Dingen die Gasaufnahmefähigkeit zu erhöhen. Zu diesem Zweck ist z.B. die Wasserleitung 24 vor dem Karbonisator 27 als Durchlaufkühlung 24a in einer Schleife durch die Kühleinrichtung geführt.

Die Wasserleitung 24 mündet stromabwärts des Karbonisators 27 in der Auslasseinrichtung 9 entweder mit einem eigenen Auslass oder, wie dargestellt, in einen gemeinsamen Auslass 8, aus dem somit sowohl Kaffeegetränk als auch Trinkwasser gezapft werden kann.

Der Wasserspender 3, verwendet die Reinigungseinrichtung 23 der Kaffeemaschine 2 und ist zu diesem Zweck insbesondere über eine durch ein Ventil 29 absperrbare Leitung 30 mit dem Heißwasserbereiter 13 verbunden. Die Leitung 30 sollte bevorzugt stromaufwärts des Karbonisators 27 und so dicht wie möglich am Absperrventil 28 einmünden, um alle Bereiche des Wasserspenders 3 mit Heißwasser aus dem Heißwasserbereiter 13 spülen zu können. Es kann weiterhin eine Verbindung zur nicht gezeigten Eingabe von Reinigungsmitteln oder dgl. vorgesehen sein.

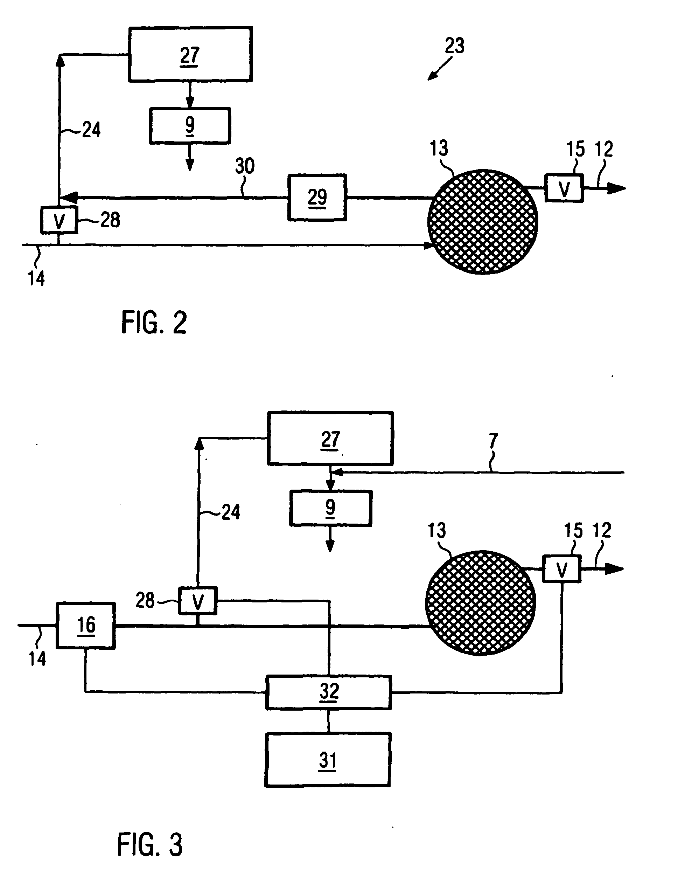

In Fig. 1 benutzen Kaffeemaschine 2 und Wasserspender 3 sehr viele Funktionskomponenten gemeinsam. Es ist jedoch auch möglich, dass nur einige, ausgewählte Funktionskomponenten gemeinsam benutzt werden. Bevorzugte Kombinationen gemeinsam benutzter Funktionskomponenten sind in den Fig. 2 bis 4 dargestellt.

Fig. 2 zeigt die äußerst zweckmäßige und bevorzugte gemeinsame Benutzung der Reinigungseinrichtung 23 über die aus dem Heißwasserbereiter 13 ausmündende und in die Wasserleitung 24 einmündende Reinigerleitung 30 mit dem Absperrventil 29.

Fig. 3 zeigt die gemeinsame Benutzung von Pumpe 16, Steuerung 32 und Bedieneinrichtung 31.

Fig. 4 zeigt die gemeinsame Benutzung der Kühlung 19 mit dem Kühlblock 20, der sowohl den Milchvorrat 18 kühlt als auch zum Kühlen des Wassers in der Leitung 24 verwendet wird, das durch den Kühlblock 20 geleitet wird. Im dargestellten Ausführungsbeispiel wird somit weder die Gasquelle 25 noch der Karbonisator 27 gekühlt.

In Abwandlung der beschriebenen und gezeichneten Ausführungsbeispiele sind auch andere Kombinationen gemeinsam benutzter Funktionskomponenten denkbar. Es ist jedoch auch möglich, dass der Wasserspender beispielsweise eine Pumpe enthält, um den Wasserdruck zu erhöhen, um die Gasaufnahme zu verbessern, und dass diese Pumpe dann wiederum durch die Kaffeemaschine mitbenutzt wird. Sind Wasserspender und Kaffeemaschine in zwei getrennten Gehäusen untergebracht, so sollten die notwendigen Verbindungen zwischen den beiden Gehäusen lösbar sein, um beide Geräte unabhängig voneinander transportieren zu können.

## Patentansprüche

1. Getränkesystem (1), mit einer Kaffeemaschine (2) zum Zubereiten und Ausgeben von Heißgetränken, und einem Wasserspender (3) zum Aufbereiten und Ausgeben von Trinkwasser, **dadurch gekennzeichnet, dass** die Kaffeemaschine (2) und der Wasserspender (3) so miteinander verbunden sind, dass ein gemeinsames Reinigungssystem (23) sowohl für die Kaffeemaschine (2) als auch den Wasserspender (3) nutzbar und sowohl mit der Kaffeemaschine (2) als auch mit dem Wasserspender (3) verbunden ist.

2. Getränkesystem nach Anspruch 1, **dadurch gekennzeichnet, dass** das Reinigungssystem (23) einen Heißwasserbereiter (13) der Kaffeemaschine (2) enthält.

3. Getränkesystem nach Anspruch 1 oder 2, **dadurch gekennzeichnet, dass** Einrichtungen für einen Frischwasserzulauf, bevorzugt eine Zulaufleitung (14) und/oder ein Wasserfilter (16a), sowohl mit der Kaffeemaschine (2) als auch mit dem Wasserspender (3) verbunden sind.

4. Getränkesystem nach einem der Ansprüche 1 bis 3, **dadurch gekennzeichnet, dass** eine Steuer- und/oder eine Bedienungseinrichtung, bevorzugt eine Steuerungseinheit (32) und/oder ein Bedienfeld (31), sowohl mit der Kaffeemaschine (2) als auch mit dem Wasserspender (3) verbunden sind.

5. Getränkesystem nach einem der Ansprüche 1 bis 4, **dadurch gekennzeichnet, dass** der Wasserspender (3) eine Einrichtung (27) zum Einleiten eines Gases in Wasser aufweist, und dass eine Druckerhöhungspumpe (16) vorgesehen ist, die sowohl mit der Kaffeemaschine (2) als auch mit der Gaseinleit-Einrichtung (27) des Wasserspenders (3) verbunden ist.

6. Getränkesystem nach einem der Ansprüche 1 bis 5, **dadurch gekennzeichnet, dass** die Kaffeemaschine (2) eine Kühleinrichtung (19) für Milch aufweist, die zum Kühlen von Komponenten (24, 25, 27) des Wasserspenders (3) mit diesem verbunden ist.

7. Getränkesystem nach einem der Ansprüche 1 bis 6, **dadurch gekennzeichnet, dass** der Wasserspender (3) und die Kaffeemaschine (2) ein gemeinsames Gehäuse (4) aufweisen.

8. Getränkesystem nach einem der Ansprüche 1 bis 7, **dadurch gekennzeichnet, dass** die Kaffeemaschine (2) und der Wasserspender (3) einen gemeinsamen Auslauf (8) aufweisen.

## Claims

1. Drinks system (1) having a coffee machine (2) for preparing and serving hot drinks, and a water dispenser (3) for preparing and serving drinking water, **characterised in that** the coffee machine (2) and the water dispenser (3) are connected to one another, so that a common cleaning system (23) can be used both for the coffee machine (2) and the water dispenser (3) and is connected both to the coffee machine (2) and to the water dispenser (3).

2. Drinks system according to claim 1, **characterised in that** the cleaning system (23) contains a hot-water preparer (13) of the coffee machine (2).

3. Drinks system according to claim 1 or 2, **characterised in that** devices for a fresh-water supply, preferably a supply pipe (14) and/or a water filter (16a), are connected both to the coffee machine (2) and to the water dispenser (3).

4. Drinks system according to one of claims 1 to 3, **characterised in that** a control device and/or an operating device, preferably a control unit (32) and/or an operating panel (31), are connected both to the coffee machine (2) and to the water dispenser (3).

5. Drinks system according to one of claims 1 to 4, **characterised in that** the water dispenser (3) has a device (27) for introducing a gas into water, and **in that** a pressure-increasing pump (16) is provided, which is connected both to the coffee machine (2) and to the gas-introduction device (27) of the water dispenser (3).

6. Drinks system according to one of claims 1 to 5, **characterised in that** the coffee machine (2) has a cooling device (19) for milk, which, for cooling components (24, 25, 27) of the water dispenser (3), is connected to the latter.

7. Drinks system according to one of claims 1 to 6, **characterised in that** the water dispenser (3) and the coffee machine (2) have a common housing (4).

8. Drinks system according to one of claims 1 to 7, **characterised in that** the coffee machine (2) and the water dispenser (3) have a common outlet (8).

## Revendications

1. Appareil pour boissons (1) comprenant une machine à café (2) servant à préparer et à délivrer des boissons chaudes et comprenant un distributeur d'eau (3) servant à préparer et à délivrer de l'eau potable, **caractérisé en ce que** la machine à café (2) et le distributeur d'eau (3) sont reliés entre eux de telle sorte qu'un système de nettoyage (23) commun peut être utilisé tant pour la machine à café (2) que le distributeur d'eau (3) et qu'il est relié tant à la machine à café (2) qu'au distributeur d'eau (3).

2. Appareil pour boissons selon la revendication 1, **caractérisé en ce que** le système de nettoyage (23) comporte un système de chauffage de l'eau (13) de la machine à café (2).

3. Appareil pour boissons selon la revendication 1 ou 2, **caractérisé en ce que** des dispositifs pour une arrivée d'eau fraîche, de préférence une conduite d'arrivée (14) et/ou un filtre à eau (16a), sont reliés tant à la machine à café (2) qu'au distributeur d'eau (3).

4. Appareil pour boissons selon l'une quelconque des revendications 1 à 3, **caractérisé en ce qu'**un dispositif de commande et/ou de service, de préférence une unité de commande (32) et/ou un panneau de commande (31) sont reliés tant à la machine à café (2) qu'au distributeur d'eau (3).

5. Appareil pour boissons selon l'une quelconque des revendications 1 à 4, **caractérisé en ce que** le distributeur d'eau (3) présente un dispositif (27) servant à introduire un gaz dans l'eau, et **en ce qu'**est prévue une pompe de surpression (16), qui est reliée tant à la machine à café (2) qu'au dispositif d'introduction de gaz (27) du distributeur d'eau (3).

6. Appareil pour boissons selon l'une quelconque des revendications 1 à 5, **caractérisé en ce que** la machine à café (2) présente un dispositif de refroidissement (19) pour le lait, lequel est relié au distributeur d'eau (3) pour refroidir des composants (24, 25, 27) de ce dernier.

7. Appareil pour boissons selon l'une quelconque des revendications 1 à 6, **caractérisé en ce que** le distributeur d'eau (3) et la machine à café (2) présentent un logement commun (4).

8. Appareil pour boissons selon l'une quelconque des revendications 1 à 7, **caractérisé en ce que** la machine à café (2) et le distributeur d'eau (3) présentent une sortie (8) commune.
